Europäisches Patentamt

European Patent Office

Office européen des brevets

(11) Publication number: **0 434 151 A2**

## EUROPEAN PATENT APPLICATION

(21) Application number: 90203339.8

(22) Date of filing: 14.12.90

(51) Int. Cl.5: **A23D 7/00**

(30) Priority: **21.12.89 EP 89203308**

(43) Date of publication of application:
**26.06.91 Bulletin 91/26**

(84) Designated Contracting States:
**GB**

(71) Applicant: **UNILEVER NV**
**Burgemeester s'Jacobplein 1 P.O. Box 760**
**NL-3000 DK Rotterdam(NL)**

(72) Inventor: **Cain, Frederick William, UNILEVER**
**Research Lab.**
**Olivier van Noortlaan 120**
**NL-3133 AT Vlaardingen(NL)**

(74) Representative: **Mulder, Cornelis Willem**
**Reinier, Dr. et al**
**UNILEVER N.V. Patent Division P.O. Box 137**
**NL-3130 AC Vlaardingen(NL)**

(54) Edible plastic product.

(57) The present invention is concerned with an edible plastic product comprising at least 30 wt.% of fat, which fat essentially consists of a mixture of one or more indigestible polyol fatty acid polyesters and triglycerides, wherein the product contains less than 5 % saturated fatty acid residues, the mixture of polyol fatty acid polyesters constitutes 15 to 70 wt.% of the fat and said mixture has a slip melting point of at least 30° C.

The product according to the invention offers the advantage that it contains only an extremely limited amount of digestible saturated fatty acid residues.

EP 0 434 151 A2

## EDIBLE PLASTIC PRODUCT

The present invention relates to an edible plastic product comprising indigestible polyol fatty acid polyesters and triglycerides.

Polyol fatty acid polyesters, and in particular, the sugar fatty acid polyesters, such as e.g. the sucrose fatty acid polyesters, are known as suitable low-calorie fat-replacers in edible products. Substantially indigestible for human beings they have physical and organoleptic properties very similar to triglyceride oils and fats conventionally used in edible products. Polyol fatty acid polyesters are also reported to have use as pharmaceutical agents e.g. in view of their ability to take up fat-soluble substances, such as in particular cholesterol, in the gastro-intestinal tract, and subsequently remove those substances from the human body. Accordingly, it is attractive to replace at least part of the fat in edible fat-containing products by polyol fatty acid polyesters. It is further reported that in food products the use of polyol fatty acid polyesters which are liquid at body temperature, may give rise to the so-called problem of anal leakage.

Edible fat-containing products comprising indigestible polyol fatty acid polyesters are known in the art, and described in eg U.S. Pat. Nos. 3,600,186, 4,005,195, 4,005,196, 4,034,083 and EP Pat. Publ. Nos. 0 233 856, 0 236 288, and 0 235 836.

Consumption of large amounts of triglyceride fat is generally deemed undesirable as it can lead to obesity and moreover because saturated fatty acid residues present therein are believed to increase the blood cholesterol level. It is known in the art to tackle the latter problem by utilizing triglyceride fats containing only a limited amount of saturated fatty acid residues, e.g. sunflower oil, soy bean oil. In some product applications, however, it is impossible to completely avoid the use of triglyceride fat containing a substantial amount of saturated fatty acid residues.

In the preparation of plastic products such as spreads, the incorporation of a substantial amount of e.g. sunflower oil to produce a spread low in SAturated Fatty Acid residues (low SAFA spread), is well known in the art. In order to obtain the required plasticity and stability, however, it is always necessary to include a substantial amount of high melting triglyceride fat. Such high melting triglyceride fats always contain high levels of saturated fatty acid residues. Consequently even low SAFA spreads known in the art contain a substantial amount of saturated fatty acid residues.

We have found a way now to prepare plastic products containing only an extremely limited amount of saturated fatty acid residues. Here by saturated fatty acid residues are exclusively meant those saturated fatty acid residues that are present in digestible compounds. Such products of extremely low SAFA content can be obtained by selecting a triglyceride fat containing a very limited amount of saturated fatty acid residues and combining said triglyceride fat with a high melting indigestible polyol fatty acid polyester so as to obtain the required plasticity.

Thus, the present invention is particularly concerned with an edible plastic product comprising at least 30 wt.% of fat, which fat essentially consists of a mixture of one or more indigestible polyol fatty acid polyesters and triglycerides, wherein the product contains less than 5 % saturated fatty acid residues, the mixture of polyol fatty acid polyesters constitutes 15 to 70 wt.% of the fat and said mixture has a slip melting point of at least $30°$ C. Here the percentage of saturated fatty acid residues is obtained by first converting the digestible fatty acid residues into fatty acid methylesters and subsequently determining by means of gaschromatography what weight-percentage of the methylesters consists of saturated fatty acid methylesters.

In this specification, unless indicated otherwise, the term 'fat' refers to edible fatty substances in a general sense, including natural or synthesized fats and oils consisting essentially of triglycerides such as, for example, soybean oil, sunflower oil, palm oil, coconut oil, fish oil, lard and tallow, which may have been partially or completely hydrogenated or modified otherwise, as well as non-toxic fatty materials having properties similar to triglycerides, which materials may be indigestible, such as for example waxes, e.g. jojoba oil and hydrogenated jojoba oil, and polyol fatty acid polyesters referred to hereinafter in more detail.

By selecting a triglyceride oil containing a very limited amount of saturated fatty acid residues, e.g less than 15 %, and combining such oil in a suitable ratio with indigestible polyol fatty acid polyesters, products can be obtained that contain even less than 4 % saturated fatty acid residues. Throughout this document the terms oil and fat are deemed synonymous and used interchangeably.

According to a preferred embodiment of the invention the product contains at least 30 wt.% fat. Moreover the product preferably contains at least 40 %, more preferably from 45-85 % triglycerides by weight of the fat. The benefits of the present invention are most pronounced in products containing relatively high levels of triglycerides. In such products the indigestible polyol fatty acid polyesters are used to replace the substantial amount of high melting triglycerides normally required to impair sufficient plasticity to the product.

Preferably the product according to the invention contains from 10 to 70 wt.%, more preferably from 35 to 65 wt.% of an aqueous phase. Examples of plastic products containing an aqueous phase are spreads, bakery margarine etc. According to an even more preferred embodiment the present product is fat-continuous and contains a dispersed aqueous phase.

In order to obtain a plastic product that is sufficiently stable and plastic at temperatures in the range of 25-30°C it is useful to incorporate high melting polyol fatty acid polyesters. Thus, preferably, the mixture of polyol fatty acid polyesters has a slip melting point of at least 35°C, more preferably in the range of 38° to 55°C.

Although the inclusion of a substantial amount of high melting polyester can have a positive effect on the stability of the present product, the inclusion of too much high melting polyester will have an adverse effect on the oral melt of said product. Preferably the amount of polyol fatty acid polyester and the melting characteristics thereof are balanced off in such a manner that the fat phase has an $N_{35}$-value of less than 2. Products having an $N_{35}$-value of less than 2 generally display a better oral melt than products having a higher $N_{35}$-value.

The $N_t$-value whenever referred to in this application, is measured by the nuclear magnetic relaxation technique and is a direct measure of the level of solid fat content at temperature t. An appropriate procedure is described in Fette, Seifen, Anstrichmittel 80(5), 180-186 (1978). To some extent N-values of fats and fatty substances are dependent on the temperature history in the preparation of the samples for the N-value measurement. For the purposes of the present invention a suitable preparatory temperature history comprises heating the sample to 80°C, followed by 5 minutes at 60°C and 16 hours at 0°C, whereafter the sample is held for 30 minutes at the temperature of the N-value measurement, subsequent to which said measurement is immediately carried out.

The triglycerides used in the present product should contain at most a very limited amount of saturated fatty acid residues. Generally the triglycerides present in the plastic product should contain less than 17 % saturated fatty acid residues. Such triglycerides can be obtained directly by extraction from a suitable vegetable source, or alternatively by, for instance, fractionation of an oil containing more than 17 % saturated fatty acid residues, so as to obtain an olein fraction containing less than 17 wt.% SAFA. Examples of triglycerides that can suitably be used in the present product are triglycerides are derived from an oil selected from the group consisting of soya bean oil, sunflower oil, rape seed oil, safflower oil and mixtures thereof.

We have found that the oral response of the present product can be improved by the inclusion of a substantial amount of protein in the aqueous phase. Accordingly, preferably, the aqueous phase contains at least 0.1 wt.% protein. The protein in the aqueous phase is believed to promote the in-mouth break down of the present product. Examples of proteins that can suitably be used in the present product are: milk protein, soya protein etc.

In particular where the present product contains at least 35 wt.% of an aqueous phase, it can be beneficial include a gelling agent therein so as to stabilize the product and improve its oral response. Preferably the aqueous phase of the present product contains a gelling amount of a gelling agent. Examples of suitable gelling agents are: gelatin, carrageenan, starch and starch derivatives etc, gelatin being most preferred.

In this specification the term 'polyol' is intended to refer to any aliphatic or aromatic compound which comprises at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxyl groups. Examples of sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and alpha-methylglucoside. A generally used and preferred sugar polyol is sucrose.

In this specification the term 'polyol fatty acid polyester' is intended to refer to any such polyesters or mixtures thereof of which, on an average, more than 70 % of the polyol hydroxyl groups have been esterified with fatty acids.

In this specification by 'indigestible' is meant that at least about 70 % by weight of the material concerned is not digested by the human body.

The polyol fatty acid polyesters which may suitably be used in the present invention, have been defined in general chemical terms hereinbefore. Preferably, polyol fatty acid polyesters derived from sugars or sugar alcohols are applied, and in particular, sugar fatty acid polyesters derived from disaccharides, such as sucrose.

In general fatty acids per se or naturally occurring fats and oils may be used as source for the fatty acid residues in the polyol fatty acid polyesters. Conventional techniques may be used to introduce, if necessary, the required solids profile. Suitable techniques include full or partial hydrogenation, interesterification, transesterification and fractionation, and may be used before or after conversion of the polyols to polyol fatty acid polyesters. Suitable sources of the fatty acid residues are vegetable oils and fats, such as in particular soybean oil, (part of) which is modified to provide the resulting polyol fatty acid polyester with the required solids profile.

It should be understood that in general the polyol fatty acid polyester blend suitable for inclusion in the fat-continuous phase of the present compositions besides high-melting polyesters can also contain low-melting polyesters. It can thus be advantageous to obtain high-melting and low-melting fat fractions (i.e. fractions having high solids and low solids profiles) by fractionating a single fat blend, such as partially hardened soybean oil or a sugar polyester blend comprising both solid and liquid fractions, and combine the high-melting and low-melting fractions in the appropriate ratio in order to arrive at the required N-values of the fat-continuous phase.

As defined hereinbefore polyol fatty acid polyesters may be applied of which, on an average, more than 70 % of the polyol hydroxyl groups have been esterified with fatty acids. Preferably polyol fatty acid polyesters are used with higher degrees of conversion, in particular polyol fatty acid polyesters of which, on an average, more than 85 % or even over 95 % of the polyol hydroxyl groups have been esterified with fatty acids.

As indicated hereinbefore in addition to the polyol fatty acid polyester the products of the invention can comprise conventional oils and fats which may be of animal, fish, vegetable or dairy origin. Suitable triglyceride fats and oils include, optionally partially hydrogenated, interesterified or fractionated, coconut oil, palm kernel oil, palm oil, fish oils, lard, tallow fat, butter fat, soybean oil, safflower oil, cotton seed oil, rapeseed oil, poppy seed oil, corn oil, sunflower oil and mixtures thereof.

In the products according to the invention conventionally used fat- and water-soluble additives, such as emulsifiers, milk, preservatives, vitamins, in particular vitamins A, D and E, salt and flavour compounds, may be incorporated.

The spread compositions according to the present invention can be prepared by conventional processing. The ingredients are premixed and subsequently processed using conventional heat-exchanging/mixing units to cool, mix and work the spread compositions. Suitable processing devices for these purposes are well-known. Examples thereof are VotatorsTM, crystallizers, resting tubes, pressure valves, static mixers and jet mixers. It is also possible to use cavity transfer mixers as described in WO-A 8 303 222.

The invention is illustrated by means of the following examples.

Example 1

A fat-continuous low fat spread was prepared using the following formulation:

| Ingredient | % by weight |
|---|---|
| Fat phase | 40.0 |
| Monoglycerides (Hymono 8903 $^{TM}$) | 0.10 |
| Beta carotene (0.4% in sunflower oil) | 0.15 |
| Gelatin | 3.0 |
| Skimmed milk powder | 1.0 |
| Salt | 0.4 |
| Potassium sorbate | 0.13 |
| pH to 5.1 with lactic acid | |
| Water | balance |

The fat phase of the spread was composed of the following components:

| Ingredient | % by weight of fat |
|---|---|
| Sunflower oil | 50 |
| Sucrose fatty acid polyester * | 50 |

\* fatty acid residues derived from palm oil partially hardened to a slip melting point of 44°C; degree of esterification over 95 %

The concentration level of digestible saturated fatty acid residues in the fat phase components was as follows:

| Fat component | % SAFA |
|---|---|
| Sunflower oil | 13.0 |
| Sucrose polyester | 0.8 |
| Monoglycerides | 100 |

The N-values of the fat phase were as follows:

| | $N_5$ | $N_{10}$ | $N_{20}$ | $N_{30}$ | $N_{35}$ |
|---|---|---|---|---|---|
| Fat phase | 35 | 31 | 20 | 5 | 0 |

The aqueous phase and fat phase were admixed to form a premix and a spread was produced by means of an inversion process using a line containing a sequence of apparatus consisting of a scraped surface heat exchanger (A-unit), a stirred crystallizer (C-units), another A-unit and yet another C-unit. Inversion was obtained in the first C-unit.

The processing conditions applied were as follows:

| | Rotation speed (rpm) | Exit temp. (°C) |
|---|---|---|
| First A-unit | 500 | 11 |
| First C-unit | 1600 | 28 |
| Second A-unit | 500 | 15 |
| Second C-unit | 150 | 17 |

The product obtained was stored for one day at 15°C, one week at 5°C and then analyzed and evaluated by an expert panel. The following analytical data were obtained:

$C_5$ *                      1500 g/cm$^2$
$C_{10}$                     1190 g/cm$^2$
$C_{15}$                      890 g/cm$^2$
$C_{20}$                      690 g/cm$^2$

Conductivity (at 5°C)  0.002 $_m$illiSiemens/cm

* The $C_t$ values represent the hardness of the spread at temperature t. The hardness was measured by means of a cone penetrometer as described in J. Am. Oil. Chem. Soc. 36 (1959), 345-348.

The spread was found to be stable, easy spreadable. The product had an oral melt characteristic very similar to that of commercial triglyceride low fat spreads. The product contained 2.8 % saturated fatty acid residues.

Example 2
Example 1 was repeated with the exception that the fat phase had the following composition:

| Ingredient | % by weight of fat |
|---|---|
| Rape seed oil | 75 |
| Sucrose fatty acid polyester * | 25 |

* fatty acid residues derived from 53% fully hardened palm kernel oil, slip melting point 39°C, and 47% fully hardened palm oil (slip melting point 58°C); hydroxyl value of 2.3; slip melting point of 38°C.

The concentration level of digestible saturated fatty acid residues in the fat phase components was as follows:

| Fat component | % SAFA |
|---|---|
| Rape seed oil | 8.0 |
| Sucrose polyester | 2.9 |
| Monoglycerides | 100 |

The N-values of the fat phase were as follows:

|  | $N_5$ | $N_{10}$ | $N_{20}$ | $N_{30}$ | $N_{35}$ |
|---|---|---|---|---|---|
| Fat phase | 25 | 23 | 15 | 3 | 0 |

The processing conditions used in the preparation of a low fat spread were as follows:

EP 0 434 151 A2

|  | Rotation speed (rpm) | Exit temp. (°C) |
|---|---|---|
| First A-unit | 500 | 12 |
| First C-unit | 1600 | 22 |
| Second A-unit | 500 | 14 |
| Second C-unit | 150 | 16 |

The following analytical data were obtained for this product:

| | |
|---|---|
| $C_5$ | $190 \ g/cm^2$ |
| $C_{10}$ | $180 \ g/cm^2$ |
| $C_{15}$ | $140 \ g/cm^2$ |
| $C_{20}$ | $115 \ g/cm^2$ |

Conductivity (at 5°C) 0.001 milliSiemens/cm
Again the product was found to be stable and easy spreadable, even when taken directly from the fridge. The product contained 2.7 % saturated fatty acid residues.

## Claims

1. Edible plastic product comprising at least 30 wt.% of fat, which fat essentially consists of a mixture of one or more indigestible polyol fatty acid polyesters and triglycerides, wherein the product contains less than 5 % saturated fatty acid residues, the mixture of polyol fatty acid polyesters constitutes 15 to 70 wt.% of the fat and said mixture has a slip melting point of at least 30°C.

2. Product according to claim 1, wherein the product contains less than 4 % saturated fatty acid residues.

3. Product according to claim 1 or 2, wherein the product contains at least 40 %, preferably from 45-85 % triglycerides by weight of the fat.

4. Product according to any one of claims 1-3, wherein the product contains from 10 to 70 wt.%, preferably from 35 to 65 wt.% of an aqueous phase

5. Product according to claim 4, wherein the product is fat-continuous and contains a dispersed aqueous phase.

6. Product according to any one of claims 1-5, wherein the mixture of polyol fatty acid polyesters has a slip melting point of at least 35°C, preferably in the range of 38° to 55°C.

7. Product according to any one of claims 1-6, wherein the fat phase has an $N_{35}$-value of less than 2.

8. Product according to any one of claims 1-7, wherein the triglycerides are derived from an oil selected from the group consisting of soya bean oil, sunflower oil, rape seed oil, safflower oil and mixtures thereof.

9. Product according to any one of claims 4-8, wherein the aqueous phase contains at least 0.1 wt.% protein.

10. Product according to any one of claims 4-9, wherein the aqueous phase contains a gelling amount of a gelling agent.

7